# EUROPÄISCHE PATENTSCHRIFT

(11) **EP 1 831 586 B1**
(45) Veröffentlichungstag und Bekanntmachung des Hinweises auf die Patenterteilung: **28.10.2015**
(21) Anmeldenummer: 05810771.5
(22) Anmeldetag: 17.11.2005
(51) Int. Cl.: F16G 1/28

(54) **ZAHNRIEMEN MIT ZAHNAUFLAGE AUS GEWEBE**
TOOTHED BELT COMPRISING A TOOTH SUPPORT MADE OF FABRIC
COURROIE DENTEE COMPRENANT UN SUPPORT A DENTS FABRIQUE DANS DU TISSU

(30) Priorität: 21.12.2004 DE 102004062760
(43) Veröffentlichungstag der Anmeldung: 12.09.2007
(73) Patentinhaber: ContiTech Antriebssysteme GmbH, 30165 Hannover (DE)
(72) Erfinder: UNRUH, Axel, 30655 Hannover (DE); WELL, Michael, 38159 Vechelde (DE); MAHNKEN, Claus-Lüder, 27367 Ahausen (DE); TAMS, Jörg, 30457 Hannover (DE); KANZOW, Henning, 30519 Hannover (DE); SCHULTE, Hermann, 30823 Garbsen (DE)
(74) Vertreter: Finger, Karsten
(86) Internationale Anmeldenummer: PCT/EP2005/012312
(87) Internationale Veröffentlichungsnummer: WO 2006/066669

(56) Entgegenhaltungen:
- WO-A-99/64328
- JP-A- H0 351 341
- US-A- 4 302 197
- US-A- 5 417 618
- US-A1- 2003 068 948

## Beschreibung

Die Erfindung betrifft einen Zahnriemen mit einer Zahnauflage aus einem Gewebe und eine zugehörige Zahnauflage.

Zahnriemen werden in erster Linie als Kraftübertragungsriemen (Transmissionsriemen) eingesetzt. Dabei greifen die Zähne des Zahnriemens in die-Zahnzwischenräume eines Gegenriemens oder einer Zahnscheibe ein, um so eine Kraftübertragung zu bewirken. Zahnriemen werden häufig bei Synchronriementrieben oder positiven Antriebsriementrieben verwendet und dienen beispielsweise zur Synchronisation zweier rotierender Wellen.

Im Automobilbereich werden für die Zahnriemen häufig Standardgummizahnriemen verwendet, die im Allgemeinen einen rückwärtigen Bereich, einen gezahnten vorderen Bereich und eine dazwischen liegende Zugträgerlage beispielsweise aus Stahl- oder Glascord aufweisen. Der gezahnte vordere Bereich besteht häufig aus einem Vulkanisat auf HNBR-Basis, d.h. es ist ein hydriertes Acrylnitril-Butadien-Copolymerisat enthalten, das die üblichen Zuschlagstoffe enthält. Die Ansprüche an derartige Zahnriemen in Bezug auf ihre mechanische und thermische Belastbarkeit steigen mit der Leistung der Maschinen, in denen sie eingesetzt werden sollen. Lange Haltbarkeit und hohe mechanische Belastbarkeit in einem weiten Temperatureinsatzbereich sind daher unerlässlich. Beispiele für derzeit gebräuchliche Zahnriemen sind in der WO 00/29762 und dem U.S. Patent 4,775,357 beschrieben.

Zur Erhöhung vor allem der mechanischen Stabilität der Zähne des Zahnriemens kann eine Zahnauflage in Form einer im Allgemeinen durchgehenden und Zähne und Zahnzwischenräume vollständig abdeckenden Auflage auf der gezahnten Oberfläche des Zahnriemens vorgesehen sein. Diese Zahnauflage kann aus einer Beschichtung beispielsweise aus einem modifizierten Vulkanisat bestehen, oder sie kann vorzugsweise aus einem Gewirk oder Gewebe gebildet werden. In der Praxis sehr bewährt hat sich eine Auflage von Polyamid6.6-Stretchgewebe, das gute mechanische Eigenschaften und gute Haftungseigenschaften zur Gummimischung zeigt.

Das Polyamidgewebe hat jedoch den Nachteil, dass es bei Betrieb der Zahnriemen über längere Zeit bei hohen Temperaturen (oberhalb 110 °C) thermisch geschädigt wird, so dass Zahnabscherung und dadurch bedingte Frühausfälle des ganzen Zahnriemens begünstigt werden.

Da die Motorleistung im Kraftfahrzeugbereich ständig steigt und die Motoren zur Verringerung von Geräuschen immer stärker gekapselt werden, werden auch die Zahnriemen immer höheren Temperaturen ausgesetzt, so dass ein dringendes Bedürfnis nach besser und langfristig hochtemperaturbeständigen Gewebezahnauflagen für Zahnriemen besteht.

Es wurde daher, wie beispielsweise in der WO 00/29762 bereits vorgeschlagen, andere Auflagen als Polyamidgewebe zu verwenden. Hierbei müssen jedoch Nachteile im Vergleich zu den ausgezeichneten mechanischen und haftungsgebenden Eigenschaften des Polyamids in Kauf genommen werden.

Die Aufgabe der Erfindung besteht daher darin, die Probleme in Stand der Technik zu vermeiden und einen Zahnriemen mit einer Zahnauflage zur Verfügung zu stellen, die die Temperaturbeständigkeit des Zahnriemens erhöht und Ausfallerscheinungen verhindert, und zwar bei weitgehend erhaltenen mechanischen Eigenschaften.

Zur Lösung dieser Aufgabe ist vorgesehen, dass bei einem Zahnriemen mit einer Zahnauflage der oben genannten Art aus Gewebe zur Abdeckung der gezahnten Oberfläche eines Zahnriemens dieses Gewebe als ein Mischgewebe auf Basis eines Polyamidgewebes ausgebildet ist, bei dem die Schussfäden in Umfangs/Längsrichtung des Riemens ganz oder teilweise durch Fäden aus Polyetheretherketon (PEEK), Polyimid (PI) und/oder meta-Aramid ersetzt und/oder mit PEEK, PI und/oder meta-Aramid modifiziert sind.

Überraschenderweise wurde gefunden, dass die Temperaturresistenz und Beständigkeit eines Zahnriemens mit einer Zahnauflage aus einem Polyamidgewebe bereits dadurch in erstaunlichem Ausmaße verbessert werden kann, dass ausschließlich die Schussfäden, die als Einzelfäden oder als gezwirnte Garne vorliegen können, ganz oder teilweise durch Fäden bzw. Garne aus den oben genannten Materialien oder Mischungen davon ersetzt werden oder mit diesen Materialien modifiziert sind. Die Modifikation soll dabei nicht in einer Beschichtung oder Ausrüstung bestehen, da hierdurch die guten mechanischen Eigenschaften des PA beeinträchtigt werden könnten. Wenigstens die Kettfäden oder vorzugsweise auch ein weiterer Teil der Schussfäden besteht weiterhin aus Polyamid, um dem Auflagegewebe, die damit verbundenen positiven Eigenschaften in genügendem Umfang zu verleihen.

Vorzugsweise ist das Basisgewebe ein Polyamid6.6-Stretchgewebe.

In diesem Basisgewebe werden vorzugsweise 2 bis 70 % und hiervon bevorzugt 5 bis 50 % oder weiter vorzugsweise 5 bis 20 % der Schussfäden bezogen auf ihre Anzahl durch Fäden oder Garne aus Polyetheretherketon, Polyimid und/oder meta-Aramid ersetzt. Dabei kann der genannte Anteil der ersetzten Schussfäden aus einem der Materialien oder einer Mischung aus diesen Materialien mit oder ohne Polyamid bestehen. Weiterhin können die Polyamid-Schussfäden so ersetzt werden, dass mehrere Garne oder Fäden aus den verschiedenen genannten Materialien in Ersatz für Polyamid-Schussgarne oder -fäden eingesetzt werden können.

In einer alternativen Ausführungsform können die Schussfäden aus Polyamid ganz oder teilweise und vorzugsweise zu 2 bis 70 %, weiter vorzugsweise 5 bis 50 %, weiter vorzugsweise 5 bis 20 % mit Polyetheretherketon, Polyimid und/oder meta-Aramid modifiziert sein. Dies kann in der Form vorgesehen sein, dass die Schussfäden insgesamt aus einem mit PEEK, PI und/oder meta-Aramid in Form von Polymermischungen oder -Copolymeren modifizierten Polyamid bestehen. Die Modifikation der Schussfäden kann auch so vorgesehen sein, dass einzelne innerhalb eines Garns verzwirnte Fäden durch solche aus PEEK, PI und/oder meta-Aramid ersetzt werden, und zwar vorzugsweise in den genannten Anteilen.

Zusätzlich kann zur Erhöhung der Verschleißbeständigkeit vorgesehen sein, dass weiterhin Teile der Polyamidschussfäden durch Garne oder Einzelfäden aus PTFE ersetzt oder mit PTFE modifiziert sind oder dass das Gewebe eine PTFE-Präparation enthält.

Ergänzend kann die Zahnauflage wenigstens einseitig, ein- oder mehrstufig beschichtet sein, vorzugsweise mit einem Haftvermittler und/oder einem Vulkanisat, um die Anbindung der Auflage an die Zahnoberfläche noch zu erhöhen und/oder den Verschleiß und Abrieb zu verringern.

Der Zahnriemen selbst ist vorzugsweise ein Gummizahnriemen und insbesondere ein solcher, bei dem wenigstens der gezahnte Riementeil ein hydriertes Acrylnitril-Butadien-Copolymer enthält. Weiterhin ist bevorzugt, dass der Zahnriemen zur Verstärkung wenigsten einen Zugstrang, der vorzugsweise Glas-, Carbon- und/oder Aramidfilamente in Form von Corden, enthält. Durch die erfindungsgemäße Zahnauflage kann die Lebensdauer des damit ausgerüsteten Zahnriemens bei hohen Temperaturen (größer 110 °C) erheblich gesteigert und der Ausfallmechanismus Zahnabscherung deutlich verzögert werden.

Zusätzlich kann die Riemenrückenfläche mit einem weiteren Gewebe geschützt sein.

Im Folgenden wird die Erfindung anhand eines Ausführungsbeispiels in Verbindung mit der Zeichnung näher beschrieben.

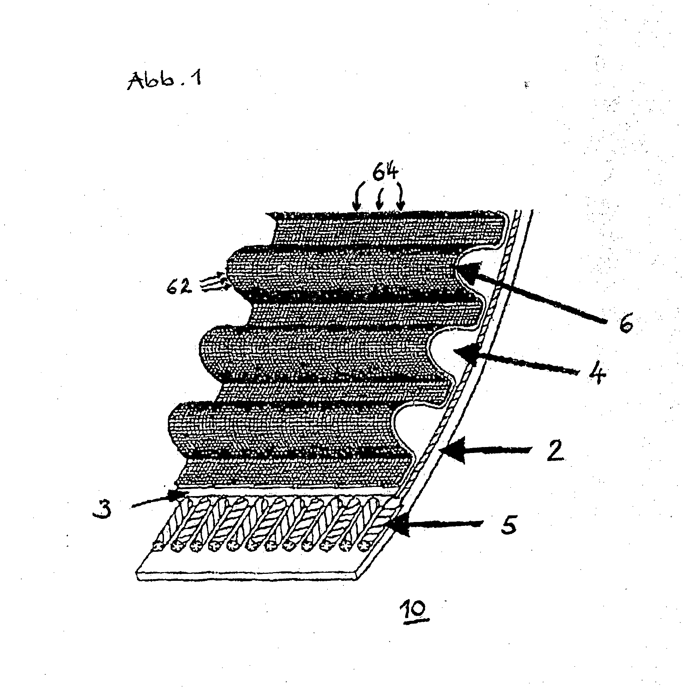

Abbildung 1 zeigt eine schematische Schnittdarstellung eines Zahnriemenabschnitts.

Der im ganzen mit 10 bezeichnete Zahnriemen, von dem hier nur ein Ausschnitt gezeigt ist, besitzt eine Rückseite 2 und einen vorderen, gezahnten Teil 3 mit einzelnen Zähnen 4 zum Eingriff in die Zahnzwischenräume eines nicht dargestellten Gegenparts. Zwischen der Rückseite 2 und dem vorderen Teil 3 des Riemens befindet sich eine Zugträgerlage aus einzelnen Zugsträngen 5 beispielsweise aus Glascord, Stahlcord, Carbon- oder Aramidcord. Die gezahnte Oberfläche des vorderen oder oberen Teils 3 des Riemens ist mit einer Zahnauflage 6 abgedeckt, die in Form eines Gewebes mit Kettfäden 62 und Schussfäden 64 ausgebildet ist. Die Schussfäden erstrecken sich demnach in Längsrichtung des häufig als Endlosband ausgebildeten Riemens, als parallel zu den Zugsträngen 5. Ein Teil der Schussgarne des Polyamid6.6-Stretchgewebes wurde in diesem Beispiel durch PEEK-Garne der entsprechenden Stärke (Garndicke) ersetzt, während die übrigen Schussfäden weiterhin aus PA6.6 bestehen, ebenso wie die Kettfäden 62.

### Beispiele

Zahnriemen mit einem Ersatz der PA-Schussfäden zu 5 %, 8,5 %, 10 % und 20 % durch ein PEEK-Schussgarn wurden vermessen und als gut bewertet, wobei der Einsatz höherer Anteile je nach geplantem Anwendungszweck des Zahnriemens ohne weiteres möglich ist.

### Vergleichstests

Es wird ein Maximalkrafttest an einem herkömmlichen und einem der Erfindung entsprechenden Zahnriemen durchgeführt. Hierzu wird ein elektrisch geschleppter Verteiler-Einspritzpumpen-Motor verwendet, dessen Drehzahl beständig in der Art nachgeregelt wird, dass ein maximales Drehmoment auf den Riemen wirkt. Der Test wird in einer Heizkammer durchgeführt, deren Temperatur so geregelt wird, dass die Riementemperatur 160 °C beträgt. Die Ruhetrumkraft des Riemens beträgt 350N. Die Testriemen sind 15 mm breit.

Ein Serienzahnriemen, bestehend aus einem PA6.6-Gewebe, einem Zugstrang aus Glascord und einer HNBR-Gummimischung wird mit einem Riemen verglichen, bei dem in der Zahnauflage ein Teil der Schussfäden durch PEEK-Garne ersetzt worden sind.

### Ergebnisse

| | A | B |
|---|---|---|
| Riementyp: | Serienzahnriemen | Zahnriemen nach der Erfindung |
| Zahnmaterial: Zugstrang | HNBR-Gummimischung Glascord | HNBR-Gummimischung wie A Glascord, wie A |
| Zahnauflage: | PA6.6-Gewebe | Grundgewebe: |
| | | PA6.6-Gewebe wie A, bei welchem 10 % der Schussfäden durch PEEK-Garne entsprechender Stärke (Dicke) ersetzt wurden |
| durchschnittliche Laufzeit | 48 h | 95 h |

## Patentansprüche

1. Zahnriemen (10) mit einer Zahnauflage (6) aus Gewebe zur Abdeckung der gezahnten Oberfläche des Zahnriemens (10), **dadurch gekennzeichnet, dass** das Gewebe ein Mischgewebe auf Basis eines Polyamidgewebes ist, bei dem die Schussfäden (64) in Umfangs/Längsrichtung des Riemens ganz oder teilweise durch Fäden aus Polyetheretherketon (PEEK), Polyimid (PI) und/oder meta-Aramid ersetzt oder mit PEEK, PI und/oder meta-Aramid modifiziert sind.

2. Zahnriemen (10) nach Anspruch 1, **dadurch gekennzeichnet, dass** das Polyamidgewebe ein PA6.6-Stretchgewebe ist.

3. Zahnriemen (10) nach Anspruch 1 oder 2, **dadurch gekennzeichnet, dass** 2 bis 70 %, vorzugsweise 5 bis 50 %, weiter vorzugsweise 5 bis 20 % der Schussfäden (64), bezogen auf ihre Anzahl, ersetzt sind.

4. Zahnriemen (10) nach Anspruch 1 oder 2, **dadurch gekennzeichnet, dass** die Schussfäden (64) zu 2 bis 70 %, vorzugsweise 5 bis 50 %, weiter vorzugsweise 5 bis 20 % mit PEEK, PI und/oder meta-Aramid modifiziert sind.

5. Zahnriemen (10) nach einem der Ansprüche 1 bis 4, **dadurch gekennzeichnet, dass** die Schussfäden (64) in Umfangs/Längsrichtung des Riemens zusätzlich teilweise durch Fäden aus PTFE ersetzt oder mit PTFE modifiziert sind.

6. Zahnriemen (10) nach einem der Ansprüche 1 bis 4, **dadurch gekennzeichnet, dass** das Mischgewebe wenigstens einseitig, ein- oder mehrstufig beschichtet ist, vorzugsweise mit Haftvermittler und/oder einem Elastomer.

7. Zahnriemen (10) nach einem der Ansprüche 1 bis 6, **dadurch gekennzeichnet, dass** wenigstens der gezahnte Riementeil (3) ein hydriertes Acrylnitril-Butadien-Copolymer enthält.

8. Zahnriemen (10) nach einem der Ansprüche 1 bis 8, **dadurch gekennzeichnet, dass** er zur Verstärkung wenigstens einen Zugstrang (5), vorzugsweise Glas-, Carbon- und/oder Aramidfilamente enthält.

9. Verwendung eines Gewebes auf Polyamidbasis zur Abdeckung der gezahnten Oberfläche eines Zahnriemens (10), **dadurch gekennzeichnet, dass** das Gewebe ein Polyamid-Mischgewebe ist, bei dem die Schussfäden (64) in Umfangs/Längsrichtung des Riemens (10) ganz oder teilweise durch Fäden aus Polyetheretherketon (PEEK), Polyimid (PI) und/oder meta-Aramid ersetzt oder mit PEEK, PI und/oder meta-Aramid modifiziert sind.

10. Verwendung nach Anspruch 9, **dadurch gekennzeichnet, dass** das Polyamidgewebe ein PA6.6-Stretchgewebe ist.

11. Verwendung nach Anspruch 9 oder 10, **dadurch gekennzeichnet, dass** 2 bis 70 %, vorzugsweise 5 bis 50 %, weiter vorzugsweise 5 bis 20 % der Schussfäden (64), bezogen auf die Anzahl der Schussfäden, ersetzt sind.

12. Verwendung nach Anspruch 9 oder 10, **dadurch gekennzeichnet, dass** die Schussfäden (64) zu 2 bis 70 %, vorzugsweise 5 bis 50 %, weiter vorzugsweise 5 bis 20 % mit PEEK, PI und/oder meta-Aramid modifiziert sind.

13. Verwendung nach einem der Ansprüche 9 bis 12, **dadurch gekennzeichnet, dass** die Schussfäden (64) im Umfangs/Längsrichtung des Riemens zusätzlich teilweise durch Fäden aus PTFE ersetzt oder mit PTFE modifiziert sind.

14. Verwendung nach einem der Ansprüche 9 bis 13, **dadurch gekennzeichnet, dass** das Mischgewebe wenigstens einseitig, ein- oder mehrstufig beschichtet ist, vorzugsweise mit einem Haftvermittler und/oder einem Elastomer.

## Claims

1. Toothed belt (10) comprising a tooth covering (6) of woven fabric for covering the toothed surface of the toothed belt (10), **characterized in that** the fabric is a blend fabric based on a polyamide fabric wherein the weft threads (64) in the peripheral/longitudinal direction of the belt are wholly or partly replaced by threads of polyetheretherketone (PEEK), polyimide (PI) and/or meta-aramid or modified with PEEK, PI and/or meta-aramid.

2. Toothed belt (10) according to Claim 1, **characterized in that** the polyamide fabric is a woven N66 stretch fabric.

3. Toothed belt (10) according to Claim 1 or 2, **characterized in that** 2 to 70%, preferably 5 to 50% and more preferably 5 to 20% of the weft threads (64) are replaced in terms of their number.

4. Toothed belt (10) according to Claim 1 or 2, **characterized in that** the weft threads (64) are modified with PEEK, PI and/or meta-aramid to an extent in the range from 2 to 70%, preferably 5 to 50% and more preferably 5 to 20%.

5. Toothed belt (10) according to any one of the Claims 1 to 4, **characterized in that** the weft threads (64) in the peripheral/longitudinal direction of the belt are in part additionally replaced by threads of PTFE or modified with PTFE.

6. Toothed belt (10) according to any one of the Claims 1 to 4, **characterized in that** the blend fabric is coated at least one-sidedly, in one or more stages, preferably with adhesion promoter and/or an elastomer.

7. Toothed belt (10) according to any one of Claims 1 to 6, **characterized in that** at least the toothed belt portion (3) comprises a hydrogenated acrylonitrile-butadiene rubber copolymer.

8. Toothed belt (10) according to any one of Claims 1 to 8, **characterized in that** it comprises at least one tensile strand (5), preferably filaments of glass, of carbon and/or of aramid, for reinforcement.

9. Use of a polyamide-based woven fabric for covering the toothed surface of a toothed belt (10), **characterized in that** the fabric is a polyamide blend fabric wherein the weft threads (64) in the peripheral/longitudinal direction of the belt (10) are wholly or partly replaced by threads of polyetheretherketone (PEEK), polyimide (PI) and/or meta-aramid or modified with PEEK, PI and/or meta-aramid.

10. Use according to Claim 9, **characterized in that** the polyamide fabric is a woven N66 stretch fabric.

11. Use according to Claim 9 or 10, **characterized in that** 2 to 70%, preferably 5 to 50% and more preferably 5 to 20% of the weft threads (64) are replaced in terms of their number.

12. Use according to Claim 9 or 10, **characterized in that** the weft threads (64) are modified with PEEK, PI and/or meta-aramid to an extent in the range from 2 to 70%, preferably 5 to 50% and more preferably 5 to 20%.

13. Use according to any one of the Claims 9 to 12, **characterized in that** the weft threads (64) in the peripheral/longitudinal direction of the belt are in part additionally replaced by threads of PTFE or modified with PTFE.

14. Use according to any one of the Claims 9 to 13, **characterized in that** the blend fabric is coated at least one-sidedly, in one or more stages, preferably with an adhesion promoter and/or an elastomer.

## Revendications

1. Courroie dentée (10) comportant un support de dents (6) en tissu destiné à couvrir la surface dentée de la courroie dentée (10), **caractérisée en ce que** le tissu est un tissu mélangé à base d'un tissu en polyamide, dans lequel les fils de trame (64) sont partiellement ou totalement, dans le sens longitudinal/périphérique de la courroie, remplacés par des fils en polyétheréthercétone (PEEK), polyimide (PI) et/ou méta-aramide ou modifiés avec de la PEEK, du PI et/ou du méta-aramide.

2. Courroie dentée (10) selon la revendication 1, **caractérisée en ce que** le tissu en polyamide est un tissu élastique en PA6.6

3. Courroie dentée (10) selon la revendication 1 ou 2, **caractérisée en ce que** 2 à 70 %, de préférence 5 à 50 %, de façon encore plus particulièrement préférée 5 à 20 % des fils de trame (64), par rapport à leur nombre, sont remplacés.

4. Courroie dentée (10) selon la revendication 1 ou 2, **caractérisée en ce que** les fils de trame (64) sont à raison de 2 à 70 %, de préférence 5 à 50 %, de façon encore plus particulièrement préférée 5 à 20 % modifiés avec de la PEEK, du PI et/ou du méta-aramide.

5. Courroie dentée (10) selon l'une quelconque des revendications 1 à 4, **caractérisée en ce que** les fils de trame (64) sont en outre partiellement, dans le sens longitudinal/périphérique de la courroie, remplacés par des fils en PTFE ou modifiés avec du PTFE.

6. Courroie dentée (10) selon l'une quelconque des revendications 1 à 4, **caractérisée en ce que** le tissu mélangé est revêtu au moins d'un côté, en une ou plusieurs étapes, de préférence avec un agent d'adhérence et/ou un élastomère.

7. Courroie dentée (10) selon l'une quelconque des revendications 1 à 6, **caractérisée en ce qu'**au moins la partie dentée (3) de la courroie contient un copolymère butadiène-acrylonitrile hydrogéné.

8. Courroie dentée (10) selon l'une quelconque des revendications 1 à 8, **caractérisée en ce que** pour le renforcement elle contient au moins un câble de traction (5) de préférence des filaments de verre, de carbone et/ou d'aramide.

9. Utilisation d'un tissu à base de polyamide pour la couverture de la surface dentée d'une courroie dentée (10), **caractérisée en ce que** le tissu est un tissu mélangé à base de polyamide, dans lequel les fils de trame (64) sont partiellement ou totalement, dans le sens longitudinal/périphérique de la courroie (10), remplacés par des fils en polyétheréthercétone (PEEK), polyimide (PI) et/ou méta-aramide ou modifiés avec de la PEEK, du PI et/ou du méta-aramide.

10. Utilisation selon la revendication 9, **caractérisée en ce que** le tissu en polyamide est un tissu élastique en PA6.6

11. Utilisation selon la revendication 9 ou 10, **caractérisée en ce que** 2 à 70 %, de préférence 5 à 50 %, de façon encore plus particulièrement préférée 5 à 20 % des fils de trame (64), par rapport au nombre des fils de trame, sont remplacés.

12. Utilisation selon la revendication 9 ou 10, **caractérisée en ce que** les fils de trame (64) sont à raison de 2 à 70 %, de préférence 5 à 50 %, de façon encore plus particulièrement préférée 5 à 20 % modifiés avec de la PEEK, du PI et/ou du méta-aramide.

13. Utilisation selon l'une quelconque des revendications 9 à 12, **caractérisée en ce que** les fils de trame (64) sont en outre partiellement, dans le sens longitudinal/périphérique de la courroie, remplacés par des fils en PTFE ou modifiés avec du PTFE.

14. Utilisation selon l'une quelconque des revendications 9 à 13, **caractérisée en ce que** le tissu mélangé est revêtu au moins d'un côté, en une ou plusieurs étapes, de préférence avec un agent d'adhérence et/ou un élastomère.
